# EUROPEAN PATENT APPLICATION

(11) **EP 4 574 409 A1**
(43) Date of publication of application: **25.06.2025**
(21) Application number: 24842453.3
(22) Date of filing: 22.07.2024
(51) Int. Cl.: B29D 30/06

(54) **VULCANIZATION DEVICE**

(30) Priority: 20.07.2023 CN 202310891489; 20.07.2023 CN 202310891751
(71) Applicant: Himile Mechanical Science and Technology (Shandong) Co., Ltd, Weifang, Shandong 261500 (CN)
(72) Inventor: LI, Jian, Weifang, Shandong 261500 (CN); SUN, Riwen, Weifang, Shandong 261500 (CN); FANG, Qiang, Weifang, Shandong 261500 (CN); CHEN, Zhonglei, Weifang, Shandong 261500 (CN); DONG, Shouda, Weifang, Shandong 261500 (CN); JI, Songjiang, Weifang, Shandong 261500 (CN); WANG, Yaopeng, Weifang, Shandong 261500 (CN); LIU, Weihua, Weifang, Shandong 261500 (CN); WANG, Tong, Weifang, Shandong 261500 (CN)
(74) Representative: Taylor, Gail
(86) International application number: PCT/CN2024/106787
(87) International publication number: WO 2025/016468

(57) **Abstract**

The present application provides a vulcanization device comprising: a vulcanizing mold, a vulcanizing bladder, a support assembly, a central rod, a ring seat, and the like. The central rod is sleeved in the ring seat, the ring seat is provided with a window, and a holding chamber communicated to the window is provided inside the ring seat; and the vulcanization device further comprises: a rotating member provided in the holding chamber and rotatably connected to a first side wall of the holding chamber, an electromagnetic assembly being provided between the rotating member and a second side wall of the holding chamber, and the electromagnetic assembly being adapted to be energized to rotate the rotating member; an air outlet member connected to the rotating member and extending out of the window; and a heating assembly provided in the vulcanizing bladder.

## Description

### TECHNICAL FIELD

The present application relates to the technical field of vulcanizing device, in particular to a vulcanization device, and especially to a design of a heating device in the vulcanization device.

### BACKGROUND

In industrial production, vulcanization is often used to improve the overall hardness of certain materials.

Taking vulcanization for a tire as an example, the vulcanization for tire refers to the vulcanization of a tire casing, which is the vulcanization performed by pressurization using a model. Before the vulcanization for the tire, the tire, which is a plastic rubber with viscoelasticity, is easy to deform with a low strength and no use value. By means of vulcanization, the plastic rubber is cured and become a high-elasticity rubber having use value.

In the prior art, there are two main types of vulcanization devices, one is an electrically heated vulcanization device, and the other one is a steam-heated vulcanization device.

In the electrically heated vulcanization device, nitrogen or other inert gas is used as a gas medium, which is injected into a sealed vulcanizing bladder of the vulcanization device, and is heated by a heating device provided inside or outside of the vulcanizing bladder, so that the vulcanizing bladder can be heated. A tire to be vulcanized is placed between the vulcanizing bladder and a mold, the gas medium is heated in the vulcanizing bladder by the heating assembly to generate a high-temperature gas medium, which contacts with the inside of the vulcanizing bladder to provide the heat needed for vulcanization, and the nitrogen gas can also provide pressure needed for vulcanization, so that the vulcanizing bladder expands to press the green tire to perform shaping and vulcanizing operations for the green tire with a vulcanizing machine, so as to improve the strength of the tire.

In addition, in the vulcanizing bladder, a stirring component is provided to stir the gas medium in the vulcanizing bladder, to improve the temperature uniformity in the vulcanizing bladder, and promote the heat exchange between the gas medium and vulcanizing bladder.

The above mentioned prior art vulcanization device is found to have problems during use. One of the problems is that the high-temperature gas medium inside the vulcanizing bladder sometimes has poor circulation flow, so that the temperature differences among various sites inside the vulcanizing bladder are relatively large, leading to uneven tire vulcanization which degrades tire vulcanization quality. In addition, the internal heating device of the vulcanization device will be easily damaged during operations, and maintenance of the damaged internal heating device is not easy, especially for the components such as a bearing in the device, if they are damaged, it is difficult to repair or maintain them.

Accordingly, there is need for improving the vulcanization device, particularly improving the heating device thereof, to improve temperature uniformity inside the vulcanizing bladder.

### BRIEF SUMMARY

Therefore, the present application aims to solve the technical problem of overcoming the deficiency in the prior art that uneven tire vulcanizing that degrades tire vulcanizing quality is resulted from a relatively large temperature difference among various sites inside a vulcanizing bladder due to no circulation flow of high-temperature nitrogen inside the vulcanizing bladder. The present application also aims to facilitate the repair and maintenance of the vulcanization device, especially the heating device therein.

To this end, the present application provides a vulcanization device, comprising:
a vulcanizing mold, which is openable and closeable, inside which a vulcanizing cavity is formed;
a vulcanizing bladder adapted to be placed in the vulcanizing cavity;
a support assembly comprising a central rod, and a clamping device provided on the central rod, the clamping device being adapted to sealingly mount the vulcanizing bladder in the cavity;
wherein the clamping device comprises a ring seat, the central rod is sleeved in the ring seat, the ring seat is provided with a window, a holding chamber communicated to the window is provided inside the ring seat, and the vulcanization device further comprises:
   a rotating member provided in the holding chamber and rotatably connected to a first side wall of the holding chamber, an electromagnetic assembly being provided between the rotating member and a second side wall of the holding chamber, and the electromagnetic assembly being adapted to be energized to rotate the rotating member;
   an air outlet member connected to the rotating member and extending out of the window;
   a heating assembly provided in the vulcanizing bladder.

The structure of the vulcanization device has advantages such as that the holding chamber is provided at the ring seat and the rotating member is provided in the holding chamber, so that one of the side walls of the rotating member is rotatably connected to a corresponding side wall of the holding chamber; and the electromagnetic assembly is provided between the other side wall of the rotating member and the corresponding side wall of the holding chamber, and when the electromagnetic assembly is partially energized, electromagnetic induction is generated between two portion structures, i.e. the ring seat having the holding chamber and the rotor, by means of the electromagnetic assembly, so as to ultimately rotate the rotating member to drive the air outlet member to guide the high-temperature gas medium in the vulcanizing bladder, so that the high-temperature gas medium can be circulated, ensuring temperature evenness among respective sites inside the vulcanizing bladder and thus avoiding uneven tire vulcanizing.

In addition, in the vulcanizing bladder in which a fan structure is further provided and driven to rotate to guide a high-temperature gas medium such as high-temperature nitrogen, the fan structure is usually powered by a drive motor which requires mechanical transmission, for example, via a drive shaft, gear transmission, etc., to finally drive the fan structure to rotate, and thus it is a relatively complex structure, and during the transmission, component matching failure easily occurs, degrading the normal use of a vulcanization device. In contrast, in the present application, instead of the traditional mechanical transmission form, the electromagnetic induction effect between the ring seat and rotating member is used, so as to overcome the defect that normal use of a vulcanization device in the prior art is degraded by a relatively complex structure adopted therein in which mechanical transmission is used to drive a fan structure and component matching failure easily occurs.

Optionally, the electromagnetic assembly comprises:
a permanent magnet provided on a side wall of the rotating member; and
an armature winding provided on the second side wall corresponding to the permanent magnet, the armature winding being adapted to be energized to drive the rotating member to rotate.

Such a structure has an advantage that by means of cooperation of the permanent magnet and armature winding, an electromagnetic induction effect is generated therebetween when the armature winding is energized, thereby driving the rotating member to rotate, which further drives the air outlet member, which is connected to the rotating member, to rotate.

Optionally, there is a predetermined gap between the rotating member and the second side wall of the holding chamber, a recess is formed in one of the rotating member and the second side wall, and the electromagnetic assembly is adapted to be provided in the recess.

Such a structure has advantages that: the pre-determined gap between the rotating member and the second side wall of the holding chamber ensures smooth relative rotation between the rotating member and the ring seat provided with the holding chamber; the provision of the recess provides a mounting position for the electromagnetic assembly, while ensuring a gap matching of the rotating member with most of the positions at the second side wall, thereby ensuring a compact overall structure of the vulcanization device, and reducing the risk of damaging the apparatus due to structure looseness during use.

Optionally, the heating assembly is located at the peripheral side of the air outlet member and is provided on the ring seat.

Such a structure has advantages that since the mode for providing the air outlet member may lead to transverse air discharge, the heating assembly located at the peripheral side of the air outlet member facilitates the gas medium guided by the air outlet member in directly flowing into the heating assembly, thus itis subjected to sufficient heat exchange with the heating assembly to generate a high-temperature gas medium, improving the heat exchange efficiency, and thus improves the heat exchange efficiency between the high temperature gas medium and the vulcanizing bladder. The ring seat provides a mounting position for the heating assembly. In addition, the air outlet member in the structure, compared to the air outlet member provided at the peripheral side of the heating assembly, is closer to the central rod, so that the air outlet member requires a relatively small rotational torque with smaller required power, and thus less noise. Moreover, the heating member is far away from the central rod, so that heat radiation to the central rod can be avoided, to prevent the central rod from being damaged.

Optionally, the heating assembly comprises:
a support cylinder provided on the ring seat, the outer side of the support cylinder being provided with a mounting slot;
a heater provided in the mounting slot, the support cylinder having a circulation portion formed thereon which is adapted to guide heated medium gas.

Such a structure has advantages that the mounting slot provided in the support cylinder provides a mounting position for a subsequent heater, the circulation portion refers to several through holes provided in the support cylinder, and the gas medium guided from the air outlet member flows directly into the heating assembly and then is guided out from the heating assembly through the through holes.

Optionally, the heater is in the form of a multi-layer spaced structure or a spiral structure, and the circulation portion is provided corresponding to the spacing position between two adjacent layers of the heater.

Such a structure has advantages that the heater having the multi-layer spaced structure or spiral structure has a gap space between any two adjacent layers thereof, and the multi-layer circulation portion is provided corresponding to the gap space, i.e., the through-holes are communicated with the gap space, so that any one layer of the circulation portion is located between the two layer structures of the heater, and when the gas medium circulates layer by layer, the efficiency of the heating assembly for heating the gas medium is improve, so as to enable more uniform temperature field inside the vulcanizing bladder.

Optionally, the outer side of the heating assembly is provided with a deflector shield having an enlarged end communicated with the circulation portion, and a contracted end provided towards the inner wall of the vulcanizing bladder to guide the heated medium gas towards the inner wall of the vulcanizing bladder.

The provision of the deflector shield has structural advantages that on the deflector shield, the enlarged end and contracted end are formed, the gas medium passing through the heating assembly surges into the contracted end from the enlarged end, and flows out from the contracted end, an outflowed gas medium has an increased flow rate and pressure, the increased flow rate enables correspondingly increased heat exchange efficiency between the gas medium and the vulcanizing bladder, and also, the gas medium is guided toward the inner wall of the vulcanizing bladder, which in turn further improves the uniformity of the temperature field inside the vulcanizing bladder.

Optionally, blades of the air outlet member is deflected towards one side with respect to the radial direction of the air outlet member.

Such a structure has an advantage that the blades act on the gas medium, making more uniform circulation flow of the gas medium, thus further improving the uniformity of the temperature field inside the vulcanizing bladder

Optionally, the vulcanization device further comprises a gas inlet pipeline and/or a gas exhaust pipeline provided on the ring seat.

Such a structure has an advantage that the gas inlet pipeline and gas exhaust pipeline pass through the entire ring seat, enabling the gas medium to smoothly enter the vulcanizing bladder from the outside and exit in due course. In practice, only one pipe can be provided as a guiding pipe, or both the gas inlet pipeline and gas exhaust pipeline can be provided.

Optionally, a gap is formed between the bottom of the rotating member and the holding chamber.

Such a structure has an advantage that the gap formed between the bottom of the rotating member and the holding chamber facilitates smooth relative rotation between the rotating member and the ring seat provided with the holding chamber, while further improving the uniformity of the temperature field inside the vulcanizing bladder.

The present application also relates to a heating device in a vulcanization device, the heating device comprises a ring seat, a heating assembly, and an air outlet member such as a stirring component. Wherein, the ring seat comprises an outer support cylinder and an inner support cylinder inside the outer support cylinder, the outer support cylinder and the inner support cylinder are fixed together at lower ends, and the upper end of the outer support cylinder and the upper end of the inner support cylinder are spaced apart from each other, thereby forming a semi-closed container with one open end. A rotating member is provided inside the outer support cylinder, so that the rotating member is located in the semi-closed container and can rotate with respect to the outer support cylinder, wherein the heating assembly is mounted on the outer support cylinder, the stirring component is mounted on the rotating member and disposed inside the heating assembly, and a fixed cylinder is provided inside the rotating member.

The rotation of the rotating member with respect to the outer support cylinder can be realized by the following structure: a permanent magnet is provided at a lower portion of the rotating member, and an armature winding is provided at a position, corresponding to the permanent magnet, at the outer support cylinder, so that the magnetic field generated when the armature winding is energized interacts with the magnetic field of the permanent magnet. to rotate the rotating member.

The heating device with the above structure has advantages that the semi-closed container formed by the outer support cylinder and inner support cylinder contains the rotating member and the stirring component (e.g., a fan) connected to the rotating member, thus the rotating member and stirring component can be easily taken out from the semi-closed container during repair, thus leaving a sufficient space for repair operations, and thus facilitating repair operations. Moreover, such a structure can also improve the efficiency of disassembling and assembling the rotating member and stirring component, thereby improving the maintenance efficiency.

Preferably, a fixed cylinder is rotatably assembled at the outer side of the inner support cylinder, at least one bearing is provided between the fixed cylinder and the inner support cylinder, and the rotating member is detachably fixedly connected to the fixed cylinder.

Specifically, the rotating member and the fixed cylinder are connected by a fixing screw. Or, the rotating member and the fixed cylinder may be detachably fixed by other means.

Such a structure has advantages that the rotating member and the component connected thereto can be easily removed from the heating device to facilitate repair and replacement thereof. Moreover, after the rotating member is removed, a relatively large space is left in the semi-closed container, thereby facilitating repair and replacement of other components of the heating device.

In another preferred structure, the fixed cylinder is removably mounted on the inner support cylinder, and at least one bearing is provided between the fixed cylinder and the rotating member. Such a structure has advantages that the rotating member, fixed cylinder, stirring component and bearing can, as a whole, be detachably placed in the semi-closed container, and they are taken out and installed as a whole through the opening of the semi-closed container when repair and maintenance, and thus, the disassembling and assembling efficiency is further improved, and the assembling precision for components can be ensured, facilitating a compact structure.

Preferably, a fixing component is also included, by means of which the fixed cylinder is fixed in the semi-closed container. The provision of the fixing component has an advantage of facilitating the removable installation of the fixed cylinder.

For example, the fixing component may be an inner convex ring removably connected to the top of the inner support cylinder, and the inner convex ring extends radially outwardly beyond the inner support cylinder, wherein the portion of the inner convex ring extending beyond the inner support cylinder is in press-contact with the top of the fixed cylinder to fix the fixed cylinder in place.

In another example, the fixing component is a flange formed on the top of the fixed cylinder, and when the fixed cylinder is mounted in the semi-closed container, the flange laps over the top of the inner support cylinder and can be removably fixedly connected to the inner support cylinder.

Preferably, a step is formed on the outer surface of the fixed cylinder, one end of the bearing abuts against the step, and the other end of the bearing abuts against a fixed pressing plate. Such a structure has an advantage that the bearing can be fixed efficiently, and the provision of the fixed pressing plate can also prevent splashing of the lubricating oil from the bearing during rotation, as splashing of the lubricating oil can lead to bearing lubrication failure.

Preferably, the heating assembly comprises a heating cartridge on which an electric heater is mounted. The electric heater herein is, for example, an electromagnetic induction coil, an electric heating tube, or the like.

Further specifically, a slot is provided in the outer surface of the heating cartridge, and the electric heater is wound in the slot. Further, a first ventilation opening radially passing through the heating cartridge may be formed in the heating cartridge.

Preferably, a deflector plate is provided at the outer side of the heating assembly, an upper surface of the deflector plate has a height gradually decreased in the radial outward direction, so that the deflector plate is substantially umbrella-shaped. Moreover, the deflector plate has a second ventilation opening formed at a site of the deflector plate near the heating assembly, and a third ventilation opening formed at a site of the deflector plate away from the heating assembly, and the first ventilation opening is communicated with the second ventilation opening, and the second ventilation opening is communicated with the third ventilation opening.

Such a structure has an advantage that the deflector plate having such a structure may promote flow of the gas medium in the vulcanizing bladder to further improve the temperature uniformity in the vulcanizing bladder. Preferably, the first ventilation opening is provided directly facing the second ventilation opening.

The heating device is further provided with an air inlet passage extending through the outer support cylinder and the heating cartridge.

Such a structure has an advantage that a gas medium can be injected from the outside into the vulcanizing bladder of the vulcanization device installed with the heating device.

The present application also provides a vulcanization device comprising: a vulcanizing bladder; a lower clamping component clamping a lower clamping edge of the vulcanizing bladder; an upper clamping component clamping an upper clamping edge of the vulcanizing bladder; and a central rod, an upper end of which is fixedly connected to the upper clamping component, and which can move vertically with respect to the lower clamping component. The vulcanization device further includes the heating device as described above, the lower clamping component is fixedly connected to the outer side of the outer support cylinder.

Further, the vulcanization device further includes a mold provided at the outer side of the vulcanizing bladder, a vulcanization space is formed between the mold and the vulcanizing bladder, wherein the mold is of the type that is openable and closable. Specifically, the mold may include an upper mold and a lower mold. Further, the mold may be a two-movable-piece mold, an upper open-ended movable mold, a lower open-ended movable mold, etc.

### BRIEF DESCRIPTION OF THE DRAWINGS

To more clearly illustrate the technical solutions in the detailed description of the present application or the prior art, the drawings used in the detained description of the detailed descriptions or the prior art are briefly introduced below. Obviously, the drawings in the following description are some implementations of the present application, and one skilled in the art may obtain other figures without the exercise of inventive effort, based on the drawings.
FIG. 1 is a schematic structural diagram of a vulcanization device of a first embodiment provided by the present application;
FIG. 2 is a partially enlarged view of portion A in FIG. 1;
FIG. 3 is a schematic structural diagram of an air outlet member provided in the first embodiment of the present application;
FIG. 4 is a schematic structural diagram of a vulcanization device provided in a second embodiment of the present application;
FIG. 5 is a sectional view of a vulcanization device provided in a third embodiment of the present application; and
FIG. 6 shows a sectional schematic view of a heating device in the vulcanization device of FIG. 5.

### Description of Reference Number:

100, vulcanization device
110, rotating member; 120, vulcanizing bladder; 130, central rod
140, clamping device; 141, ring seat; 1411, window; 1412, holding chamber; 1413, first side wall; 1414, second side wall; 1415, bearing; 142, lower clamping ring; 143, upper clamping ring; 144, lower pressing ring; 145, upper pressing ring;
150, electromagnetic assembly; 151, permanent magnet; 152, armature winding;
160, air outlet assembly; 161, blade;
170, heating assembly; 171, support cylinder; 172, heater; 173, circulation portion;
180, recess;
190, deflector shield; 191, enlarged end; 192, contracted end;
111, gas inlet pipeline; 112, gas exhaust pipeline; 113, gap;
200, vulcanization device;
210, rotating member
230, ring seat; 231, outer support cylinder; 232, inner support cylinder; 233, fixed cylinder;
241, bearing;
251, connecting component;
260, air outlet member;
270, heating assembly;
300, vulcanization device;
310, heating device;
311, vulcanizing bladder;
312, lower clamping component; 313, upper clamping component;
314, central rod;
320, mold; 321, upper mold; 322, lower mold;
330, ring seat; 331, outer support cylinder; 332, inner support cylinder; 333, fixed cylinder; 334, armature winding; 335, inner convex ring; 336, air inlet passage;
340, heating assembly; 341, heating cartridge; 342, electric heater; 343, first ventilation opening;
351, rotating member; 352, permanent magnet; 353, fan; 354, bearing; 355, fixed pressing plate;
360, deflector plate;
361, second ventilation opening;
362, third ventilation opening.

### DETAILED DESCRIPTION OF THE DISCLOSURE

The technical solution of the present application is to be described clearly below in conjunction with the drawings. Obviously, embodiments described are only some of the embodiments of the present application, instead of all. Based on the embodiments in the present application, all other embodiments obtained by one skilled in the art without the exercise of inventive effort will fall within the scope of protection of the present application.

In the description of the present application, as noted, terms "center", "upper", "lower", "left" "right", 'vertical', 'horizontal', 'inner', 'outer', etc. indicating the orientation or positional relation are based on those shown in the drawings, and the terms are intended only to facilitate in illustrating the present application and simplifing the description, not intended to indicate or imply that the device or element involved must have specific orientations or be constructed and operated with the specific orientations. Therefore, the terms shall not be understood as a limitation to the present application. Further, terms "first", "second", and "third" are used for purposes of describing only and shall not be understood as indicating or implying relative importance.

In the description of the present application, as noted, unless otherwise expressly specified, terms "mount", "attach", and "connect" are understood in a broad sense. For example, they can be fixed connection, detachable connection, or integrated connection; can be mechanical connection or electrical connection; can be direct connection or indirect connection via an intermediate medium; or can be internal communication of two elements. For those of ordinary skill in the art, the specific meaning of the above terms can be understood according to the content in the present application.

Further, the technical features involved in the different implementations of the present application described below can be combined with each other if they are not contradictory.

A prior art tire vulcanizing process uses nitrogen as a heating medium gas, and specifically, the process is: placing a green tire between a sealed vulcanizing bladder and a vulcanizing mold, feeding nitrogen into the vulcanizing bladder, and heating the nitrogen inside the vulcanizing bladder by a heating assembly, so that the high-temperature nitrogen contacts with the inner side of the vulcanizing bladder to provide the heat needed for vulcanizing, the nitrogen gas being also capable of providing the pressure needed for vulcanizing, so that the vulcanizing bladder expands to press the green tire to perform shaping and vulcanizing operations for the green tire along with a vulcanizing machine, to improve the strength of the tire. Also, a fan structure is also provided in the vulcanizing bladder, and is driven to rotate to guide the high-temperature nitrogen, so that it is uniformly distributed in various positions within the vulcanizing bladder, thereby resulting uniform temperature distribution within the vulcanizing bladder.

However, the above-described solution has the following problem: uneven tire vulcanizing degrading tire vulcanizing quality due to a relatively large temperature difference among various sites inside the vulcanizing bladder due to no circulation flow of high-temperature nitrogen inside the vulcanizing bladder.

Therefore, the present application is to solve the technical problem of uneven tire vulcanizing degrading tire vulcanizing quality by overcoming the defect in the prior art of a relatively large temperature difference among various sites inside a vulcanizing bladder due to no circulation flow of high-temperature nitrogen inside the vulcanizing bladder.

### <First Embodiment>

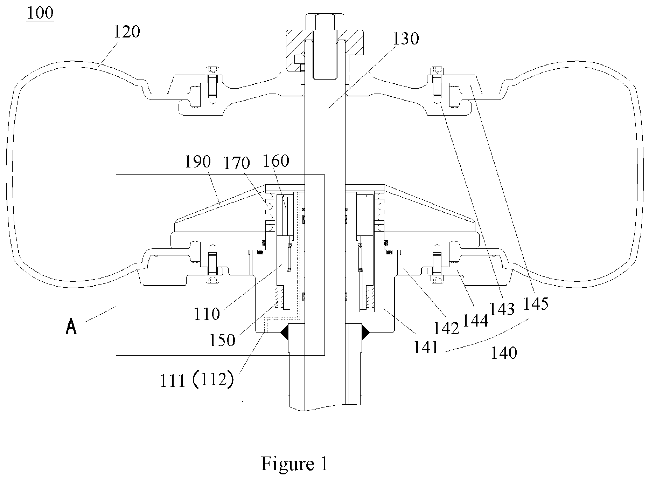

A first embodiment of the present embodiment provides a vulcanization device 100, as shown in FIGS. 1-FIG. 3, comprising: a vulcanizing mold, a rotating member 110, a vulcanizing bladder 120, a central rod 130, a clamping device 140, a ring seat 141, a window 1411, a holding chamber 1412, an electromagnetic assembly 150, an air outlet member 160, a heating assembly 170, and the like. Here, the heating device of the vulcanization device 100 includes the ring seat 141, the air outlet member 160, and the heating assembly 170.

The vulcanizing mold (shown in figures) is openable and closeable, with a vulcanizing cavity formed inside it.

Specifically, the vulcanizing mold is an upper-lower structure, the upper end of the vulcanizing mold, the liftable central rod 130, and a part of the clamping device 140 work together, and when the upper end and the lower end of the vulcanizing mold are separated, the central rod 130 can be raised to collapse the vulcanizing bladder 120, and a green tire to be vulcanized is placed in the vulcanizing cavity, and then when the upper end of the vulcanizing mold is lowered, the upper end and the lower end of the vulcanizing mold are closed, and during vulcanizing, a vulcanizing machine provides a mold-closing force for the vulcanizing mold.

Further, as noted, the vulcanizing mold in the embodiment is a two-piece mold, while in some other embodiments, the vulcanizing mold may also be a two- movable piece-mold, an upper open-ended movable mold, a lower open-ended movable road mold, etc.

The vulcanizing bladder 120 is adapted to be placed in the vulcanizing cavity.

Specifically, the vulcanizing bladder 120 is a hollow, thin-walled rubber article for a vulcanizing machine, which is used for loading a green tire to be vulcanized, then a gas medium is fed into the vulcanizing bladder 120, so as to perform shaping and vulcanizing operations along with the vulcanizing machine. The gas medium is an inert gas or a rare gas, as long as it does not participate in a redox reaction, and further optionally it may be selected as nitrogen in this embodiment.

The support assembly includes a central rod 130 and a clamping device 140 provided on the central rod 130, the clamping device 140 being adapted to sealingly mount the vulcanizing bladder 120 in the cavity.

Specifically, after the upper end and lower end of the vulcanizing mold are separated from each other, the central rod 130 may be raised, the green tire to be vulcanized is placed in the vulcanizing cavity, the central rod 130 may be lowered, and then the upper end of the vulcanizing mold is lowered to close the upper end and lower end of the vulcanizing mold. The clamping device 140 provided on the central rod 130 is adapted to seal the vulcanizing bladder 120 to avoid leakage of the gas medium.

The clamping device 140 comprises a ring seat 141, the central rod 130 is sleeved in the ring seat 141, the ring seat 141 is provided with a window 1411, and a holding chamber 1412 communicating to the window 1411 is provided inside the ring seat 141.

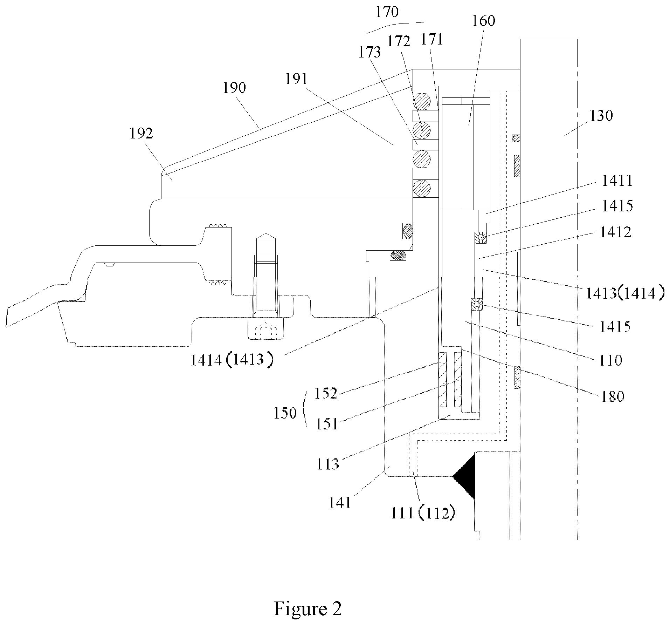

Specifically, as shown in FIGS. 1 and 2, the ring seat 141 is centered at the bottom of the vulcanizing mold, and is in clearance fit with the central rod 130 to provide a mounting space for the central rod 130, and a sealing device (not shown) is provided between the central rod 130 and the ring seat 141 to avoid leakage of the gas medium. The ring seat 141 is formed with an annular slot-shaped holding chamber, i.e., a holding chamber 1412. The holding chamber 1412 is formed with an opening, i.e., the window 1411, in its side surface close to the vulcanizing bladder 120 on the ring seat 141, and subsequently, the rotating member 110 and electromagnetic assembly 150 are suitable to be mounted from the window 1411 into the holding chamber 1412.

The rotating member 110 is provided in the holding chamber 1412 and rotatably connected to the first side wall 1413 of the holding chamber 1412, the electromagnetic assembly 150 is provided between the rotating member 110 and the second side wall 1414 of the holding chamber 1412, and the electromagnetic assembly 150 is adapted to be electrically energized to rotate the rotating member 110.

Specifically, in the view shown in FIG. 2, the first side wall 1413 of the holding chamber 1412 is a side inner wall close to the central rod 130, the second side wall 1414 of the holding chamber 1412 is a side outer wall away from the central rod 130, the rotating member 110 is in a circular cylindrical structure, and is mounted in the holding chamber 1412 through the window 1411, and the inner wall of the rotating member 110 is rotatably connected to the first side wall 1413 of the holding chamber 1412 by several bearings 1415; and the electromagnetic assembly 150 adapted to generate electromagnetic induction is provided between the outer wall of the rotating member 110 and the second side wall 1414 of the holding chamber 1412, and when the electromagnetic assembly 150 is partially energized, electromagnetic induction is generated between two portion structures, i.e. the ring seat 141 having the holding chamber 1412 and the rotor, by the electromagnetic assembly 150, ultimately rotating the rotating member 110.

As another implementation, the first side wall 1413 of the holding chamber 1412 is an outer side wall away from the central rod 130, the second side wall 1414 of the holding chamber 1412 is a side inner wall close to the central rod 130, and the rotating member 110 is in a circular cylindrical structure, and is mounted in the holding chamber 1412 through the window 1411, and the outer wall of the rotating member 110 is rotatably connected to the first side wall 1413 of the holding chamber 1412 by several bearings 1415; and the electromagnetic assembly 150 adapted to generate electromagnetic induction is provided between the inner wall of the rotating member 110 and the second side wall 1414 of the holding chamber 1412.

The air outlet member 160 is connected to the rotating member 110 and extends out of the window 1411.

Specifically, the air outlet member 160 is connected to the rotating member 110 and is adapted to synchronously rotate with the rotating member 110 when the rotating member 110 is rotated by means of the electromagnetic induction effect, so that the electromagnetic assembly 150 energized cooperates with the rotating member 110 to function as a transmission structure, to transmit power for rotating the air outlet member 160.

Further, the air outlet member 160 may be in the form of an open impeller, a closed impeller, a turbine, a fan, or the like.

The heating assembly 170 is provided in the vulcanizing bladder 120.

Specifically, the heating assembly 170 is adapted to heat a gas medium, and by providing the heating assembly 170, an operation of heating the gas medium is realized to form a high-temperature gas medium suitable for vulcanization operations.

This embodiment provides a vulcanization device, wherein a holding chamber 1412 is provided on a ring seat 141, and a rotating member 110 is provided in the holding chamber 1412, such that one of the side walls of the rotating member 110 is rotatably connected to a corresponding side wall of the holding chamber 1412, and an electromagnetic assembly 150 is provided between the other side wall of the rotating member 110 and a corresponding side wall of the holding chamber 1412, and when the electromagnetic assembly 150 is partially energized, electromagnetic induction is generated between two portion structures, i.e. the ring seat 141 having the holding chamber 1412 and rotating member 110, by means of the electromagnetic assembly 150, ultimately rotating the rotating member 110 to drive the air outlet member 160 to rotate, which guides the high temperature gas medium in the vulcanizing bladder 120 to various positions inside the vulcanizing bladder 120, so that various sites inside the vulcanizing bladder 120 are heated uniformly, thereby overcoming the defect in the prior art of uneven tire vulcanizing degrading tire vulcanizing quality due to a relatively large temperature difference among various sites inside a vulcanizing bladder resulted from no circulation flow of high-temperature nitrogen inside the vulcanizing bladder.

Based on the above implementation, as a further defined implementation, as shown in FIG. 2, the electromagnetic assembly 150 includes a permanent magnet 151 and an armature winding 152.

The permanent magnet 151 is provided on a side wall of the rotating member 110, and the armature winding 152 is provided, corresponding to the permanent magnet 151, on the second side wall 1414, and is adapted to be energized to drive the rotation of the rotating member 110. Specifically, the ring seat 141 may be provided with a lead hole, and a wire passes through the lead hole and is connected to the armature winding 152. By means of cooperation between the permanent magnet 151 and the armature winding 152, when the armature winding 152 is energized, an electromagnetic induction effect is generated between the permanent magnet 151 and the armature winding 152, thereby driving t the rotating member 110 to rotate, which in turn drives the air outlet member 160 connected to the rotating member 110 to rotate.

Based on the above implementation, as a further defined implementation, as shown in FIG. 2, a predetermined gap is provided between the rotating member 110 and the second side wall 1414 of the holding chamber 1412; and a recess 180 is formed in one of the rotating member 110 and the second side wall 1414, and the electromagnetic assembly 150 is adapted to be provided in the recess 180.

Specifically, a predetermined gap is provided between the rotating member 110 and the second side wall 1414 of the holding chamber 1412 to ensure smooth relative rotation between the rotating member 110 and the ring seat 141 provided with the holding chamber 1412; and the recess 180 is provided to provide a mounting position for the electromagnetic assembly 150 to ensure a compact overall structure of the vulcanization device.

Based on the above implementation, as a further defined implementation, as shown in FIGS. 1 and 2, the heating assembly 170 is located at the peripheral side of the air outlet member 160 and is provided on the ring seat 141.

Specifically, since the mode for providing the air outlet member 160 may lead to transverse air discharge, the heating assembly 170 located at the peripheral side of the air outlet member 160 facilitates that the gas medium guided by the air outlet member 160 directly flows into the heating assembly 170, and is subjected to sufficient heat exchange with the heating assembly 170 to generate a high-temperature gas medium, improving the heat exchange efficiency, and in turn improving the heat exchange efficiency between the high-temperature gas medium and the vulcanizing bladder 120. The ring seat 141 provides a mounting position for the heating assembly 170.

Based on the above implementation, as a further defined implementation, as shown in FIG. 2, the heating assembly 170 includes a support cylinder 171, a heater 172, a circulation portion 173, etc.

The support cylinder 171 is provided on the ring seat 141, and has an outer side provided with a mounting slot, the support cylinder 171 is located at the peripheral side of the air outlet member 160, the heater 172 is provided in the mounting slot, and the circulation portion 173 is formed in the support cylinder 171, and adapted to guide a gas medium. The support cylinder 171 may, for example, also act as a heating cartridge.

Specifically, the mounting slot provided in the support cylinder 171 provides a mounting position for a subsequent heater 172, the circulation portion 173 refers to several through holes provided in the support cylinder 171, and the gas medium guided from the air outlet member 160 flows directly into the heating assembly 170 and then exits the heating assembly 170 through the through holes.

As another implementation, the support cylinder 171 is a frame structure, the heater 172 is provided on the frame structure, the circulation portion 173 is formed by a gap portion of the frame structure, and the gas medium guided from the air outlet member 160 flows directly into the heating assembly 170 and then exits the heating assembly 170 from the gap portion.

Based on the above implementation, as a further defined implementation, as shown in FIG. 2, the heater 172 is of a multi-layer spaced structure or a spiral structure, and the circulation portion 173 is provided corresponding to the spacing position between two adjacent layers of the heater 172.

Specifically, the heater 172 having the multi-layer spaced structure or spiral structure has a gap space between any two adjacent layers thereof, and the multi-layer circulation portion 173 is provided corresponding to the gap space, i.e., the through-holes are communicated with the gap space, so that any one layer of the circulation portion 173 is located between the two layer structures of the heater 173, and when the gas medium circulates layer by layer, the efficiency of the heating assembly 170 for heating the gas medium is improved, so that temperature field inside the vulcanizing bladder 120 can be more uniform.

Based on the above implementation, as a further defined implementation, as shown in FIGS. 1 and 2, the outer side of the heating assembly 170 is provided with a deflector shield 190 having an enlarged end 191 communicated with the circulation portion 173, and a contracted end 192 provided towards the inner wall of the vulcanizing bladder 120 to guide a gas medium towards the inner wall of the vulcanizing bladder 120.

Specifically, on the deflector shield 190, the enlarged end 191 and contracted end 192 are formed, the gas medium passing through the heating assembly 170 surges into the contracted end 192 from the enlarged end 191, and flows out from the contracted end 192, an outflowed gas medium has increased flow rate and pressure, the increased flow rate enables correspondingly increased heat exchange efficiency between the gas medium and the vulcanizing bladder 120, and also, the gas medium is guided toward the inner wall of the vulcanizing bladder 120 to further improve the uniformity of the temperature field inside the vulcanizing bladder 120.

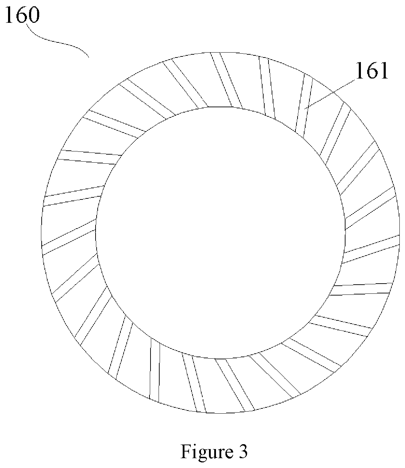

Based on the above implementation, as a further defined implementation, as shown in FIG. 3, the blade 161 of the air outlet member 160 is deflected toward one side in respect to the radial direction of the air outlet member 160.

Specifically, the blade 161 acts on the gas medium, and enable a more uniform circulation flow of the gas medium, further improving the uniformity of the temperature field inside the vulcanizing bladder 120.

Based on the above implementation, as a further defined implementation, as shown in FIGS. 1 and 2, the vulcanization device further comprises a gas inlet pipeline 111 and/or a gas exhaust pipeline 112 provided on the ring seat 141.

Specifically, the gas inlet pipeline 111 and the gas exhaust pipeline 112 pass through the entire ring seat 141, enabling the gas medium to smoothly enter the vulcanizing bladder 120 from the outside and exit in due course. In practice, only one pipe can be provided as a guiding pipe, or both the gas inlet pipeline 111 and the gas exhaust pipeline 112 can be provided.

Based on the above implementation, as a further defined implementation, as shown in FIG. 2, a gap 113 is formed between the bottom of the rotating member 1 and the holding chamber 1412.

Specifically, the gap 113 is formed between the bottom of the rotating member 110 and the holding chamber 1412, facilitating in smooth relative rotation between the rotating member 110 and the ring seat 141 provided with the holding chamber 1412, while further improving the uniformity of the temperature field inside the vulcanizing bladder 120.

Based on the above implementation, as a further defined implementation, as shown in FIG. 1, the clamping device 140 further comprises a lower clamping ring 142, an upper clamping ring 143, a lower pressing ring 144, and an upper pressing ring 145.

The lower clamping ring 142 is mounted on the ring seat 141, and the lower end of the vulcanizing bladder 120 is clamped between the lower clamping ring 142 and the vulcanizing mold.

The upper clamping ring 143 is mounted on a protruding end of the central rod 130, and the upper end of the vulcanizing bladder 120 is clamped between the upper clamping ring 143 and the vulcanizing mold.

The lower pressing ring 144 is provided between the lower clamping ring 142 and the vulcanizing mold, and the upper pressing ring 145 is provided between the upper clamping ring 143 and the vulcanizing mold.

Specifically, the clamping device 140 is provided to clamp and seal the vulcanizing bladder 120, so as to avoid leakage of heating medium gas in the vulcanizing bladder 120, the leakage leading to that the vulcanization device produces reduced vulcanization quality, or even is unable to perform vulcanization operations.

### <Second Embodiment>

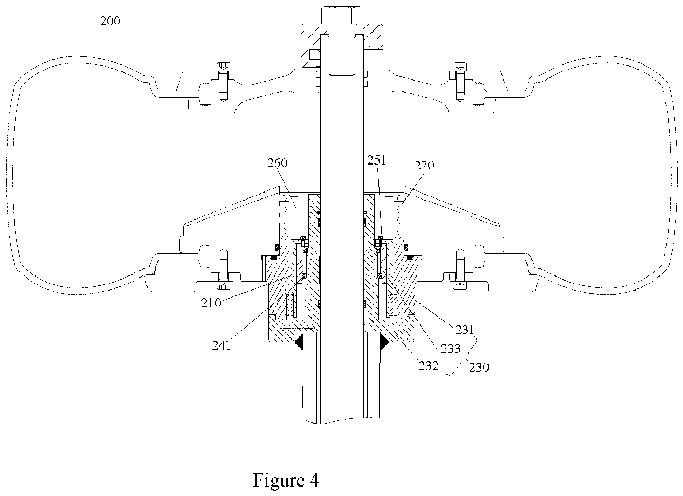

FIG. 4 shows a vulcanization device 200 of a second embodiment of the present application. Without contrary description or contradiction, the above specific structure described on the first embodiment is also applicable to the second embodiment. In the following description, the same structure will not be described in detail, and the structure of the second embodiment that differs from the first embodiment is specifically described.

Like the first embodiment, the vulcanization device 200 of the second embodiment also includes components such as a rotating member 210, a vulcanizing bladder, a central rod, a clamping device, a ring holder 230, an air outlet member 260, a heating assembly 270, etc.

In the exemplary structure shown in FIG. 4, the ring seat 230 has an outer support cylinder 231 and an inner support cylinder 232 which are fixedly connected at lower ends, for example, connected by a screw-screw hole structure, or by means of welding. Or, the same as that shown in the first embodiment, the outer support barrel 231 and the inner support barrel 232 may be integrated formed. The upper end of the outer support cylinder 231 and the upper end of the inner support cylinder 232 are spaced from each other. As a result, the outer support cylinder 231 and the inner support cylinder 232 form a semi-closed container with one end open.

The heating assembly 270 is fixedly disposed on the outer support cylinder 231, and the air outlet member 260 is fixedly connected to the rotating member 210. A fixed cylinder 233 is provided at the inner side of the rotating member 210, and a bearing 241 is provided between the fixed cylinder 233 and the inner support cylinder 232. The fixed cylinder 233 is assembled on the periphery of the inner support cylinder 232 via the bearing 241, and can rotate in the semi-closed container between the outer support cylinder 231 and the inner support cylinder 232. The fixed cylinder 233 may be rotatably assembled on the inner support cylinder 232, for example, by an interference fit or the like.

The rotating member 210 is fixedly connected to the fixed cylinder 233, for example, in the exemplary structure shown in the figure, the rotating member 210 is removably fixedly connected to the fixed cylinder 233 by a connecting component 251 which may be, for example, a fixing screw passing through screw holes aligned with each other in the rotating member 210 and fixed cylinder 233, so that the rotating member 210 and the fixed cylinder 233 are fixedly connected together. In addition to the fixing screw, the rotating member 210 may be detachably connected to the fixed cylinder 233 by other means, such as a snap structure, male-female threaded structures, etc.

This structure allows easy repair and maintenance of components of a heating device. For example, when the rotating member 210 needs to be modified or replaced, it and the air outlet member 260 connected thereto can be conveniently taken out from the semi-closed container between the outer support cylinder 231 and the inner support cylinder 232 by removing or releasing the connecting components between the rotating member 210 and the fixed cylinder 233. In addition, after the rotating member 210 is taken out, a sufficiently large space is left between the outer support cylinder 231 and the inner support cylinder 232, thereby permitting repair and replacement of other components in the heating device.

### <Third Embodiment>

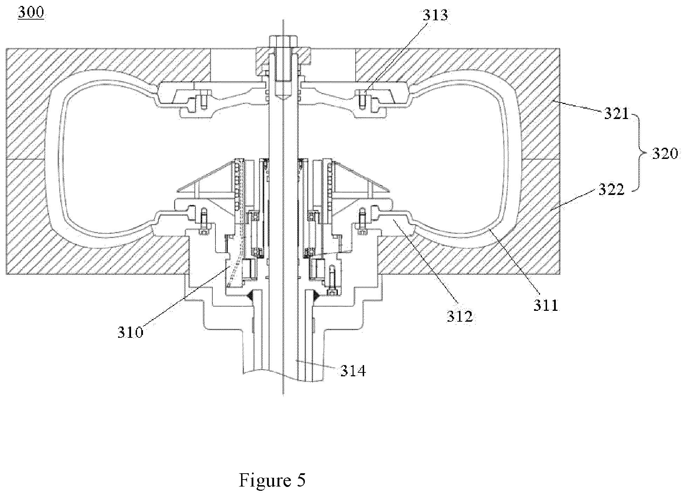

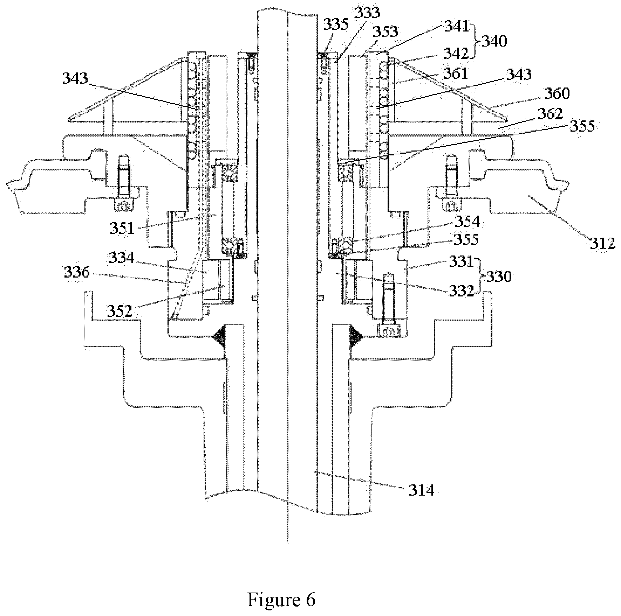

FIGS. 5 and 6 show a vulcanization device 300 of a third embodiment of the present application. Without contrary description or contradiction, the above specific structures described on the first and second embodiments are also applicable to the third embodiment. In the following description, the same structures are not be described in detail, and the structures of the third embodiment that differ from the first and second embodiments are specifically described.

FIG. 5 illustrates a sectional view of a vulcanization device 300 of the present application. The vulcanization device 300 includes a vulcanizing bladder 311, a mold 320 is provided outside the vulcanizing bladder 311, and a vulcanization space is formed between the mold 320 and the vulcanizing bladder 311. Preferably, in the mold 320, a heating device, such as an electric heating wire or the like, is provided, whereby, during vulcanizing, a tire to be vulcanized is placed between the vulcanizing bladder 311 and the mold 320, and heated and pressurized by the vulcanizing bladder 311 from the inside and by the mold 320 from the outside.

Preferably, the mold 320 may be openable and closable, for example, the mold 320 comprising an upper mold 321 and a lower mold 322. In addition, the mold 320 may be other forms of openable and closable molds, such as a two-movable-piece mold, an upper open-ended movable mold, a lower open-ended movable road mold, etc.

The lower clamping edge of the vulcanizing bladder 311 are clamped by the lower clamping component 312, and the upper clamping edge of the vulcanizing bladder 311 are clamped by the upper clamping component 313. Preferably, the lower clamping component 312 is sealingly fitted to the lower clamping edge of the vulcanizing bladder 311, and the upper clamping component 313 is sealingly fitted to the upper clamping edge of the vulcanizing bladder 311, thus forming a closed space within the vulcanizing bladder 311.

The vulcanization device 300 further includes a central rod 314, an upper end of the central rod 314 is fixedly connected to the upper clamping component 313, and the central rod 314 can vertically move in an up-down direction relative to the lower clamping component 312. By the vertical movement of the central rod 314, the expanding and collapsing of the vulcanizing bladder 11 can be realized. Here, as the central rod 314 rises after loading a tire onto the vulcanizing bladder 311, the distance between the upper clamping component 313 and the lower clamping component 312 increases, the vulcanizing bladder 311 contracts, so that a tire to be vulcanized can be sleeved at the outer side of the vulcanizing bladder 311. After the tire is placed, the central rod 314 descends, the distance between the upper clamping component 313 and the lower clamping component 312 is decreased, and a gas medium is injected into the vulcanizing bladder 311 from the outside of the vulcanization device 300 to expand the vulcanizing bladder 311, thereby exerting pressure on the tire from the inside. After the vulcanizing bladder 311 is collapsed again, a vulcanized tire can be removed from the vulcanizing bladder 311.

The vulcanization device 300 is also provided with a heating device 310, and the lower clamping component 312 is mounted at the outer side of the heating device 310.

FIG. 6 shows a specific structure of the heating device 310. The heating device 310 comprises a ring seat 330 having an outer support cylinder 331 and an inner support cylinder 332, the outer support cylinder 331 and the inner support cylinder 332 are fixedly connected at lower ends, for example, connected by a screw-screw hole structure, or by welding, or the outer support cylinder 331 and the inner support cylinder 332 are integrated formed at the lower ends. The upper end of the outer support cylinder 331 and the upper end of the inner support cylinder 332 are spaced from each other. Thus, the outer support cylinder 331 and the inner support cylinder 332 form a semi-closed container with an open end, such as the upper open end shown in the figure. The lower clamping component 312 is fixedly connected to the outer side of the outer support cylinder 331. The inner support cylinder 332 has an inner cavity passing through the inner support cylinder 332, and the central rod 314 extends through the inner cavity of the inner support cylinder 332 and can move vertically in the inner cavity in an up-down direction.

The outer support cylinder 331 is fixedly provided with a heating assembly 340 including a heating cartridge 341 on which an electric heater 342 is provided. In an exemplary structure, the outer side of the heating cartridge 341 is provided with a recess, and specifically, the electric heater 342 is an electric heating assembly, such as an electromagnetic induction coil, an electric heating tube, or the like, wound in the recess. The electric heater 342 is energized for heating.

In addition, in the heating cartridge 341, at least one first ventilation opening 343 may be provided, which substantially radially extends through the heating cartridge 341, and may be of a hole-slot structure. In the preferred structure shown in the figure, a plurality of first ventilation openings 343 are provided along the longitudinal direction of the heating cartridge 341. The first ventilation openings 343 enable the gas medium to flow through the heating assembly 340, facilitating in improving the efficiency of heating the gas medium.

At the inner side of the outer support cylinder 331, a rotating member 351 is provided. As can be seen in the figures, the rotating member 351 is placed in the semi-closed container formed between the outer support cylinder 331 and the inner support cylinder 332. The rotating member 351 is provided with a permanent magnet 352 at a lower portion thereof, and on a corresponding portion of the outer support cylinder 331, an armature winding 334 is provided. When the armature winding 334 is energized, a magnetic field generated by the armature winding 334 interacts with a magnetic field generated by the permanent magnet 352 to drive rotation of the rotating member 351. On the rotating member 351, a fan 353 is mounted, which functions as an air outlet member and also a stirring component. Specifically, the fan 353 rotates with the rotation of the rotating member 351, thereby blowing a heated gas medium into the vulcanizing bladder 311. Moreover, the fan 353 can also rotate to stir the gas medium in the vulcanizing bladder 311 to promote uniform temperature distribution within the vulcanizing bladder 311. To reduce negative effect on rotation of the rotating member 351, the rotating member 351 and the fan 353 are positioned to form a certain gap along with the outer support cylinder 331 and the heating assembly 340.

A fixed cylinder 333 is provided at the inner side of the rotating member 351, and the fixed cylinder 333 is positioned against the inner support cylinder 332, and specifically, is removably mounted to the inner support cylinder 332. A bearing 354 is provided between the fixed cylinder 333 and the rotating member 351 to facilitate rotation of the rotating member 351 relative to the fixed cylinder 33. One or more bearings 354 may be provided, for example, as shown in the figures, two bearings 354 are provided, which are arranged in an up-down direction. A step is formed on the outer surface of the fixed cylinder 333 to facilitate in mounting the bearings 354.

The fixed cylinder 333 is fixedly placed relative to the inner support cylinder 332 by an inner convex ring 335. Specifically, as shown in the figures, the inner convex ring 335 laps over the top of the inner support cylinder 332 and is connected to the inner support cylinder 332 by a removable fastener such as a screw, the inner convex ring 335 extends radially outwardly with respect to the inner support cylinder 332, and a portion of the inner convex ring 335 that extends beyond the inner support cylinder 332 may be in press-contact with the top of the fixed cylinder 333 to fix the fixed cylinder 333 in place.

Or, as an alternative, a flange may be formed on the top of the fixed cylinder 333, the flange laps over the top of the inner support cylinder 332 when the fixed cylinder 333 is mounted into the semi-closed container, and then the flange may be removably coupled to the inner support cylinder 332 by a fastener such as a screw.

Preferably, one side of the bearing 354 abuts against the step, and the other end of the bearing 354 is provided with a fixed pressing plate 355, thereby fixing the position of the bearing 354. Further, the provision of the fixed pressing plate 355 also facilitates in preventing splashing of lubricating oil from the bearing 354 during rotation.

When the inner convex ring 335 is removed from the inner support cylinder 332, for example, by unscrewing the screw connecting them together, the fixed cylinder 333, together with the rotating member 351, fan 353, and bearing 354, as a whole, may be taken out from the open semi-closed container formed by the outer support cylinder 331 and the inner support cylinder 332. In this way, repairing the components of the heating device 310 may be facilitated. Moreover, the disassembly and assembly of the heating device 310 is also facilitated by disassembling and assembling the fixed cylinder 333 with the rotating member 351, the fan 353 and the bearing 354 as a whole, with the disassembly or assembly efficiency being tested to be increased by 60%, and the component mounting precision can be ensured to improves the compactness of the structure.

Preferably, a deflector plate 360 is provided at the outer side of the heating assembly 340, and the deflector plate 360 has an upper surface whose height gradually decreases in the radial outward direction, so that the deflector plate is formed as a substantially umbrella shape. Moreover, the deflector plate 360 has a second ventilation opening formed at its side close to the heating assembly 340, and a third ventilation opening formed at a site of the deflector plate 360 away from the heating assembly 340, the first ventilation opening 343 is communicated with, preferably, directly faces, the second ventilation opening 361, and the second ventilation opening 361 is communicated with the third ventilation opening 362. The ring seat 330, deflector plate 360 and lower clamping component 312 define a flow path of a gas medium: specifically, the fan 353 rotate to drive the gas medium to sequentially flow through the first ventilation opening 343, the second ventilation opening 361, and the third ventilation opening 362, and into the vulcanizing bladder 311. The gas medium enters the semi-closed container of the ring seat 330 again after heat exchange with the vulcanizing bladder 11. The deflector plate 360 with such a structure may promote the flow of the gas medium in the vulcanizing bladder 311, thereby improving the temperature uniformity.

Further, the heating device 310 is also provided with an air inlet passage 336 for injecting the gas medium into the vulcanizing bladder 311 from the outside of the vulcanization device 300. Specifically, the air inlet passage 336 extends through the outer support cylinder 331 and the heating cartridge 341 mounted on the outer support cylinder 331, as shown by the dotted line in FIG. 6.

Obviously, the above disclosed embodiments are merely examples for the purpose of clear illustration, and are not intended to limit the implementations. Based on the above description, for one skilled in the art, other variations or changes in different forms may be made. It is not necessary or possible herein for the enumeration of all the implementations. Obvious changes derived from the present application are still within the scope of protection of the present application.

## Claims

1. A vulcanization device, comprising:
a vulcanizing mold, which is openable and closeable, inside which a vulcanizing cavity is formed;
a vulcanizing bladder adapted to be placed in the vulcanizing cavity;
a support assembly comprising a central rod, and a clamping device provided on the central rod, the clamping device being adapted to sealingly mount the vulcanizing bladder in the cavity;
wherein the clamping device comprises a ring seat, the central rod is sleeved in the ring seat, the ring seat is provided with a window, a holding chamber communicated to the window is provided inside the ring seat, and the vulcanization device further comprises:
a rotating member provided in the holding chamber and rotatably connected to a first side wall of the holding chamber, an electromagnetic assembly being provided between the rotating member and a second side wall of the holding chamber, and the electromagnetic assembly being adapted to be energized to rotate the rotating member;
an air outlet member connected to the rotating member and extending out of the window;
a heating assembly which is provided in the vulcanizing bladder and at the inner side of which the air outlet member is located.

2. The vulcanization device according to claim 1, wherein the electromagnetic assembly comprises:
a permanent magnet provided on a side wall of the rotating member; and
an armature winding provided on the second side wall corresponding to the permanent magnet, the armature winding being adapted to be energized to drive the rotating member to rotate.

3. The vulcanization device according to claim 2, wherein there is a predetermined gap between the rotating member and the second side wall of the holding chamber, a recess is formed in one of the rotating member and the second side wall, and the electromagnetic assembly is adapted to be provided in the recess.

4. The vulcanization device according to any one of claims 1-3, wherein the heating assembly is located at the peripheral side of the air outlet member and is provided on the ring seat.

5. The vulcanization device according to claim 4, wherein the heating assembly comprises:
a support cylinder provided on the ring seat, the outer side of the support cylinder being provided with a mounting slot; and
a heater provided in the mounting slot, the support cylinder having a circulation portion formed thereon which is adapted to guide heated medium gas.

6. The vulcanization device according to claim 5, wherein the heater is in the form of a multi-layer spaced structure or a spiral structure, and the circulation portion is provided corresponding to the spacing position between two adjacent layers of the heater.

7. The vulcanization device according to claim 5 or 6, wherein the outer side of the heating assembly is provided with a deflector shield having an enlarged end communicated with the circulation portion, and a contracted end provided towards the inner wall of the vulcanizing bladder to guide the heated medium gas towards the inner wall of the vulcanizing bladder.

8. The vulcanization device according to any one of claims 1-3, wherein the blades of the air outlet member is deflected towards one side with respect to the radial direction of the air outlet member.

9. The vulcanization device according to any one of claims 1-3, further comprising a gas inlet pipeline and/or a gas exhaust pipeline provided on the ring seat.

10. The vulcanization device according to any one of claims 1-3, wherein a gap is formed between the bottom of the rotating member and the holding chamber.

11. The vulcanization device according to any one of claims 1-3, wherein,
the ring seat comprises an outer support cylinder and an inner support cylinder inside the outer support cylinder, the outer support cylinder and the inner support cylinder are fixed together at lower ends, and the upper end of the outer support cylinder and the upper end of the inner support cylinder are spaced apart from each other, thereby forming a semi-closed container with one open end, and
the rotating member is provided inside the outer support cylinder, so that the rotating member is located in the semi-closed container and can rotate with respect to the outer support cylinder,
wherein the heating assembly is mounted on the outer support cylinder and the air outlet member is mounted on the rotating member and is located inside the heating assembly.

12. The vulcanization device according to claim 11, wherein a fixed cylinder is provided inside the rotating member, the fixed cylinder being rotatably assembled at the outer side of the inner support cylinder, at least one bearing is provided between the fixed cylinder and the inner support cylinder, and the rotating member is detachably fixedly connected to the fixed cylinder; or
the fixed cylinder is detachably mounted on the inner support cylinder and at least one bearing is provided between the fixed cylinder and the rotating member.

13. The vulcanization device according to claim 12, further comprising a fixing component fixing the fixed cylinder in the semi-closed container, the fixing component is an inner convex ring removably connected to the top of the inner support cylinder, and the inner convex ring extends radially outwardly beyond the inner support cylinder, wherein the portion of the inner convex ring extending beyond the inner support cylinder is in press-contact with the top of the fixed cylinder to fix the fixed cylinder in place;
or, the fixing component is a flange formed on the top of the fixed cylinder, wherein when the fixed cylinder is mounted in the semi-closed container, the flange laps over the top of the inner support cylinder and can be removably fixedly connected to the inner support cylinder.

14. The vulcanization device according to claim 12, wherein a step is formed on the outer surface of the fixed cylinder, one end of the bearing abuts against the step, and the other end of the bearing abuts against a fixed pressing plate.

15. The vulcanization device according to claim 11, wherein an air inlet passage is provided in the vulcanization device, the air inlet passage extending through the outer support cylinder and the heating cartridge.
